# EUROPEAN PATENT SPECIFICATION

(11) **EP 0 819 491 B1**
(45) Date of publication and mention of the grant of the patent: **28.07.1999**
(21) Application number: 97103843.5
(22) Date of filing: 07.03.1997
(51) Int. Cl.: B23D 61/02

(54) **Noiseless and stable blade disc for circular saws**
Geräuscharmes und stabiles Stammblatt für Kreissägeblätter
Disque de support silencieux et stable pour lames de scie circulaire

(30) Priority: 16.07.1996 IT MI960503 U
(43) Date of publication of application: 21.01.1998
(73) Proprietor: Trentinutensil S.r.l., 38068 Rovereto (Trento) (IT)
(72) Inventor: Garniga, Renzo, 38060 Isera (Trento) (IT)
(74) Representative: Carloni, Franco

(56) References cited:
- EP-A- 0 598 389
- WO-A-93/08969
- DE-U- 7 702 668
- DE-U- 8 233 373
- DE-U- 29 603 054
- US-A- 2 563 559
- US-A- 3 107 706
- US-A- 4 776 251
- US-A- 4 794 835
- US-A- 5 351 595
- IT MI960427 U (TRENTINUTENSIL SNC)

## Description

The present invention generally relates to a blade disc for circular saws according to the precharacterizing portion of claim 1 used for cutting marble, wood, metals and the like; see e.g. DE 77 02 668 U.

It is known that during the cutting movement of the blade disc, elastic vibrations will set up by the mechanical stresses exerted on the blade disc, thus producing an intense noise which makes the cutting operation very burdensome for the machine tool operator.

A customary method for reducing the noise level resulting from the cutting operation is to cut in the blade disc narrow slits which start from the outer peripheral area thereof and are generally directed toward a central bore in the blade disc in which a driving shaft is to be fitted and, further, by filling the slits with a vibration dampening material. However, this approach results in a reduction of the stiffness of the blade disc, which therefore can bend and warp during the cutting operation. More particularly, the warp of the blade disc seems to be greater when the slits have a zig-zag shape and extend from the outer peripheral area of the blade disc toward the central bore thereof where the driving shaft is fitted.

In order to obviate this disadvantage, the applicant has developed an improved blade disc for circular saws, disclosed in the Italian Utility Model Application MI96U000427, entitled "Improved blade disc for circular saws" and filed on June 7, 1996. More particularly, the blade disc for circular saws described in the above mentioned application is characterized in that the slits are formed of straight or curved segments which are filled with vibration dampening material and are arranged perpendicularly to the radiuses of the blade disc and have decreasing length from the outer periphery of the blade towards the center thereof along the radius. The shape of the slits provided in the body of the blade disc appears to be highly effective in dampening the elastic vibrations of the cutting tool, while assuring sufficient stiffness to the blade disc for working a workpiece without bends or warps during the cutting operation.

The more recent blade disc for circular saws are provided in its body with a circular zone acting as stiffening means therefor. This circular zone is referred to as a "stiffened zone" and is formed for example of a circular bead. It has been found that when the above circular bead is positioned at about two thirds from the center of the blade disc it imparts to the blade disc the required stiffness for the cutting operation.

It has been now surprisingly found that the operation stability of the blade disc having said stiffened zone is depending from the position of the slits in the blade disc rather than from their shape. More particularly, it has been noted that the operation stability of the blade disc can be enhanced by suitably choosing the position of the slits. Further, the greater operation stability thus achieved considerably reduces the level of noise developed by the blade disc during the cutting operation.

These results have led the applicant to provide an improved blade disc for circular saws having a greater operation stability and therefore a lower noise level.

More particularly, the blade disc for circular saws according to the invention is of the type provided with the stiffened zone and a plurality of narrow slit segments cut in its body for reducing the operation noise level and formed of straight or curved slit segments generally arranged along the radiuses of the blade disc, perpendicularly thereto, and is characterized in that the slit segments are positioned in the outer annular portion of the blade disc defined by the outer periphery and the stiffened zone of said blade disc.

According to a feature of the invention the width of the outer annular portion is about one third of the radius of the blade disc.

According to another feature of the invention the straight or curved slit segments are filled with a vibration dampening material.

According to a further feature of the invention the straight or curved slit segments are in the shape of alphanumeric characters.

According to still another feature of the invention the ends of the straight or curved slit segments overlap on each other in order to increase the vibration dampening action.

The present invention will be disclosed in the following description in connection with the accompanying drawings, wherein:
Fig. 1 is a plan view of a blade disc for circular saws according to the present invention to be used for cutting wood showing a first shape of the slits;
Fig. 2 is a plan view of a blade disc for circular saws according to the present invention to be used for cutting marble showing a second shape of the slits;
Fig. 3 is a sectional view along line III-III of the blade disc for circular saws shown in Figure 1;
Figs. 4A, 4B and 4C diagrammatically show three different shapes of the slits used in the blade disc for cicular saws of the present invention; and
Fig. 5 shows a blade disc having the ends of the slit segments slightly overlapping on each other.

In all the Figs. similar parts of the blade disc are indicated with similar reference numerals.

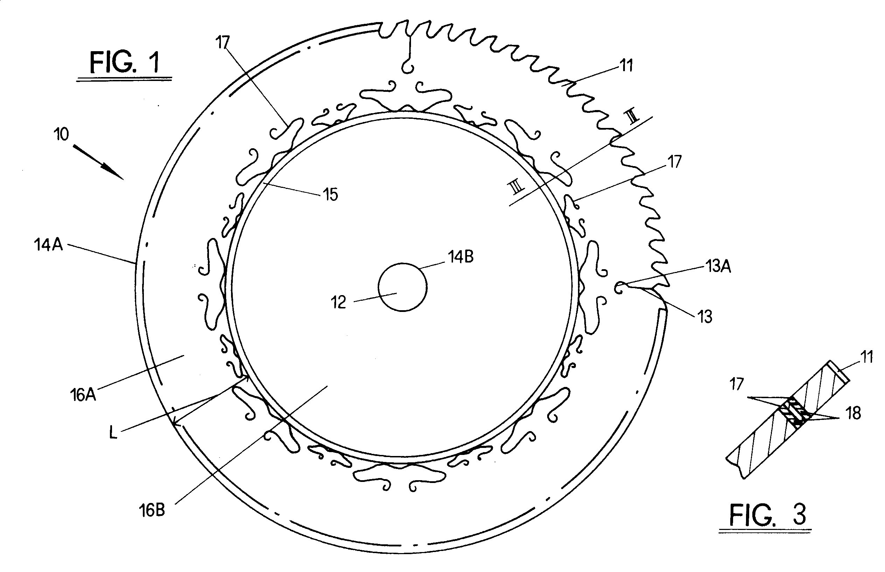

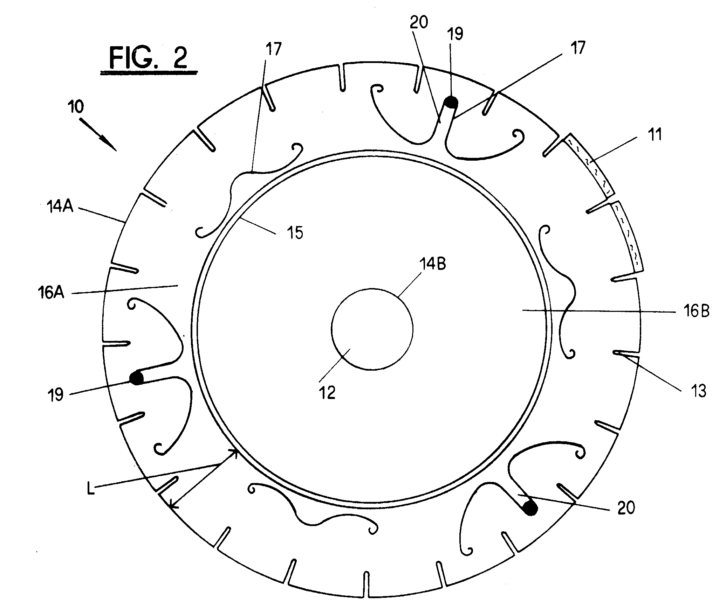

Referring now to Fig. 1, there is shown a blade disc for circular saws, generally indicated with 10, is of the type having the stiffened zone and provided with a peripheral toothing 11 adapted for cutting wood, a central bore 12 in which a driving shaft (not shown) is to be fitted and four slits 13, known per se, which are arranged at 90° degrees from each other, which start from the periphery of the blade disc and are directed toward the center thereof ending with a curled end portion 13A. The inner and outer circumference of the blade disc are indicated respectively with 14A and 14B, while the stiffened zone, known per se, on the blade disc is indicated with 15 and, as known, is geometrically represented by a circumference having its center coincident with the center of the blade disc 10 and its radius preferably equal to two thirds of the radius of the blade disc 10.

The width L of the outer annular portion 16A defined between the outer circumference 14A and the stiffened zone 15 is approximately one third of the radius of the blade disc 10.

The outer annular portion 16A is provided with a plurality of curvilinear slit segments 17 which are preferably cut by means of a high energy beam such as a laser beam and have a variable length and are generally arranged perpendicularly to the radiuses of the blade disc 10. The width of the slit segments 17 is less than one millimeter. On the contrary, there are no slit segments in the inner annular portion 16B which is defined by the stiffened zone 15 and the inner circumference 14B of the blade disc 10. It has been found that by means of this slit segment arrangement, the innermost portion of the disc blade 10, herein diagrammatically represented by the annular portion 16B, maintains the necessary structural stiffness in order to prevent the disc blade 10 from bending and warping during the cutting operation.

It has been surprisingly and unexpectedly found that, by providing slit segments 17 in the outer annular portion 16A, the operation stability of the circular blade is not adversely affected.

The unavoidable stress increase near each end of the slit segments 17 can be conventionally restrained by shaping each end of the slit segments 17 as curls. This measure is aimed at keeping the local stress in each end of the slit segments 17 within permissible values, which are lower than the ultimate tensile stress of the material of the blade disc 10. Alternatively, holes having a diameter which is at least two or three times the thickness of the slit segments 17 can be cut in a manner known per se in each end of each slit segments 17 in order to achieve the same benefit in terms of local stress reduction.

The slit segments 17 can be filled with vibration dampening material 18, preferably having low resiliency, such as a hard rubber material, which is adapted to reduce the transmission of the vibrations. However, this is not strictly necessary because it has been also found that scraps and/or dust produced during the cutting operation of a workpiece which accumulates in time in the slit segments could produce the same vibration dampening effect of the resilient material 18.

With reference to Figure 2, there is shown the blade disc 10 for circular saws of Fig. 1 intended to be used for cutting marble. Instead of having a peripheral toothing 11, it is provided in this case with a plurality of diamond bits adapted to cut marble. The slit segments in this case are in the shape of straight and curved lines of different shape from that of Fig. 1.

Here again, the slit segments 17 can be filled with a vibration dampening material 18 or can be left empty in order that the scrap and/or dust produced during the cutting operation of the workpiece will fill said slit segments 17 thereby producing a similar vibration dampening effect. Metal or rubber rivets 19 are arranged in the points where the curvature of the slit segments 17 is greater in order to prevent vibration of tongue like sections 20 which possibly could be created by the shape of the slit segments 17.

Referring now to the section illustrated in Fig. 3, there is shown how by means of the shape and the arrangement of the slit segments shown in Figs. 1 and 2 at the radiuses on which the slit segments have been cut, an alternate order of metallic and vibration dampening material filling said slit segments is provided in order to conveniently dampen the vibrations.

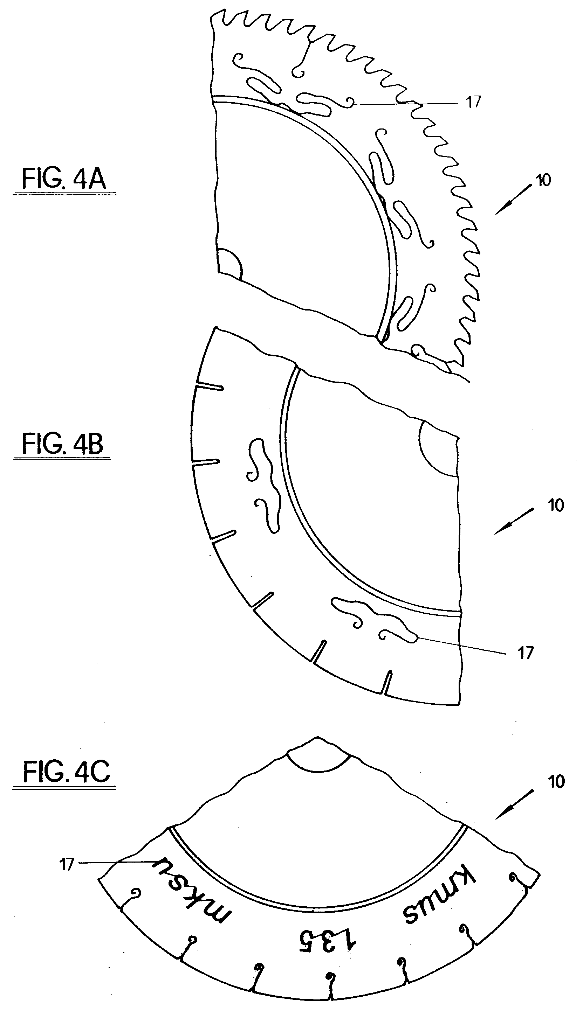

Figs. 4A, 4B and 4C diagrammatically show only a third of the blade disc of Figs. 1 and 2 in which other possible shapes of straight or curved slit segments 17 can be alternatively used in the body of the blade disc according to the present invention. More particularly, it can be noted that by means of slit segments according to the invention also alphanumeric characters can be reproduced the aim of which, in addition to dampen the blade disc vibrations, is possibly also to mark in a customized way the blade disc 10 with commercial names or trademarks of dealers or manufacturers.

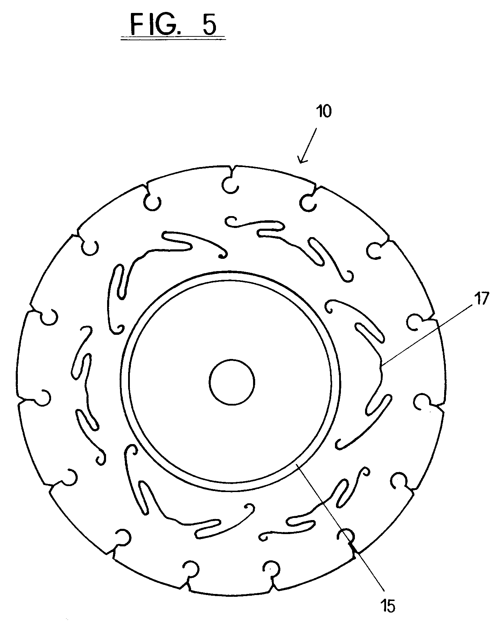

Fig. 5 shows a blade disc 10 of Fig. 1 in which the straight and curved slit segments 17 are arranged with their ends slightly overlapping on each other.

From experimental tests made by the applicant it was possible to verify that the absence of the above described slit segments 17 in the annular portion 16B defined by the stiffened zone 15 and the inner circumference 14B of the blade disc 10 will impart to the blade disc a greater stiffness than that of those known in the art. Furthermore, by slightly overlapping the ends of the slit segments as shown in Fig. 5, an increase of the vibration dampening action is achieved.

From the above description it can be understood that the blade disc of circular saws according to the present invention offers the following advantages:
- a very stable operation
- a low operation noise
- a great flexibility in choosing the shape of the slit segments to be made.

## Claims

1. Blade disc for circular saws of the type provided with a stiffened zone (15) and a plurality of narrow slit segments (17) cut in its body for reducing the operation noise level and formed of straight or curved slit segments generally arranged along the radiuses of the blade disc, perpendicularly thereto, characterized in that the slit segments (17) are positioned in the outer annular portion (16A) of the blade disc (10) defined by the outer periphery (14A) and the stiffened zone (15) of said blade disc (10).

2. Blade disc according to claim 1, characterized in that the width (L) of said outer annular portion (16A) is about one third of the radius of the blade disc (10).

3. Blade disc according to the preceding claims, characterized in that said straight or curved slit segments (17) are filled with a vibration dampening material (18).

4. Blade disc according to the preceding claims, characterized in that said straight and curved slit segments (17) are in the shape of alphanumeric characters.

5. Blade disc according to the preceding claims, characterized in that the ends of said straight or curved slit segments (17) slightly overlap on each other in order to increase the vibration dampening action.

## Patentansprüche

1. Stammblatt für Kreissägeblätter von der Art versehen mit einem versteiften Bereich (15) und einer Vielzahl in dessen Körper eingeschnittener, schmal geschlitzter Abschnitte (17), um den Betriebsgeräuschpegel zu vermindern, und gebildet aus geradlinigen oder kurvenlinearen Abschnitten, die im allgemeinen entlang den Halbmessern des Sägeblattes und senkrecht dazu angeordnet sind, dadurch gekennzeichnet, daß die Abschnitte (17) im äußeren ringförmigen Teil (16A) des Stammblattes (10) angeordnet sind, der vom äußeren Rand (14A) und dem versteiften Bereich (15) des Stammblattes (10) begrenzt wird.

2. Stammblatt nach Anspruch 1, dadurch gekennzeichnet, daß die Breite (L) des äußeren ringförmigen Teils (16A) ungefähr ein Drittel des Halbmessers des Stammblattes (10) beträgt.

3. Stammblatt nach den vorhergehenden Ansprüchen, dadurch gekennzeichnet, daß die geradlinigen oder kurvenlinearen geschlitzten Abschnitte (17) ein schwingungsdämpfendes Material (18) enthalten.

4. Stammblatt nach den vorhergehenden Ansprüchen, dadurch gekennzeichnet, daß die geradlinigen und kurvenlinearen geschlitzten Abschnitte (17) in der Form von alphanumerischen Schriftzeichen sind.

5. Stammblatt nach den vorhergehenden Ansprüchen, dadurch gekennzeichnet, daß die Enden der geradlinigen und kurvenlinearen geschlitzten Abschnitte (17) leicht übereinander liegen, um die schwingungsdämpfende Wirkung zu verstärken.

## Revendications

1. Disque de support pour lames de scie circulaire du type pourvu d'une zone raidie (15) et d'une pluralité d'entailles étroites (17) qui sont coupées dans son corps pour réduire le niveau de bruit de fonctionnement et qui sont formées des fentes étroites rectilignes ou curvilignes, arrangées en général le long des rayons de la lame circulaire perpendiculairement aux mêmes, caractérisé en ce que les fentes (17) sont positionnées dans la couronne circulaire extérieure (16A) de la lame circulaire (10), délimitée par le bord extérieure (14A) et la zone raidie (15) de ladite lame circulaire (10).

2. Disque de support selon la revendication 1, caractérisé en ce que la largeur (L) de ladite couronne circulaire extérieure (16A) correspond environ à une troisième du rayon de la lame circulaire (10).

3. Disque de support selon les revendications précédentes, caractérisé en ce que lesdites fentes étroites rectilignes ou curvilignes (17) sont remplies d'un matériel amortissant les vibrations (18).

4. Disque de support selon les revendications précédentes, caractérisé en ce que lesdites fentes étroites rectilignes et curvilignes (17) sont en forme de caractères alphanumériques.

5. Disque de support selon les revendications précédentes, caractérisé en ce que les extrémités desdites fentes étroites rectilignes ou curvilignes (17) se superposent légèrement les unes sur les autres afin d'augmenter l'action amortissante des vibrations.
